# EUROPÄISCHE PATENTSCHRIFT

(11) **EP 0 668 240 B1**
(45) Veröffentlichungstag und Bekanntmachung des Hinweises auf die Patenterteilung: **06.11.1996**
(21) Anmeldenummer: 95100344.1
(22) Anmeldetag: 12.01.1995
(51) Int. Cl.: B67D 5/32

(54) **Vorrichtung zur Überwachung der Betätigung der Produktventile in Tankwagen**
Device for monitoring of the activation of the valves of tank trucks
Dispositif pour la surveillance de la commande des soupapes d'un camion citerne

(30) Priorität: 16.02.1994 DE 4404876
(43) Veröffentlichungstag der Anmeldung: 23.08.1995
(73) Patentinhaber: ALFONS HAAR Maschinenbau GmbH & Co., D-22547 Hamburg (DE)
(72) Erfinder: Haar, Thomas, Dipl.-Ing., D-25469 Halstenbek (DE)
(74) Vertreter: Patentanwälte Hauck, Graalfs, Wehnert, Döring, Siemons

(56) Entgegenhaltungen:
- EP-A- 0 518 662
- DE-U- 9 303 644

## Beschreibung

Die Erfindung bezieht sich auf eine Vorrichtung zur Überwachung der Betätigung der Produktventile in Tankwagen nach dem Oberbegriff des Patentanspruchs 1. Dokument EP-A-0 518 662 offenbart ein Beispiel einer solchen Vorrichtung.

Der Transport von flüssigen Brennstoffen zu Tankstellen und ähnlichen Abnehmern von einem Depot aus erfolgt mit Hilfe von speziellen Straßentankwagen. Sie sind normalerweise mit einer Reihe von Kammern ausgerüstet, die unter Umständen unterschiedliche Brennstoff- bzw. Kraftstoffsorten enthalten, zum Beispiel verbleites und unverbleites Benzin, Dieselkraftstoff usw. Üblicherweise ist jeder Kammer eine Absperrarmatur zugeordnet, über die die Kammer befüllt und entleert wird.

Die Befüllung der Kammer erfolgt über Befüll- und Entleerungsschläuche, die an entsprechende Stutzen des Tankwagens gekoppelt werden. Es ist bekannt, die Absperrarmaturen ferngesteuert zu betätigen, und zwar von der Stelle des Fahrzeugs aus, an der die Schläuche angeschlossen werden. Diese Steuerung erfolgt üblicherweise hydraulisch oder pneumatisch, wobei in jüngster Zeit die pneumatische Steuerung bevorzugt wird. Als Befehlsgeräte werden handbetätigte Ventile mit integrierter Selbsthaltung verwendet.

In Deutschland muß entsprechend Verordnung, in anderen Ländern freiwillig, eine sogenannte Abfüllsicherung beim Befüllen von Tanks mit wassergefährdenden Flüssigkeiten eingesetzt werden. Dies geschieht über eine elektronische Einrichtung, die den maximalen Füllstand des zu befüllenden Tanks überwacht. Spricht sie an, so wird die Selbsthaltung aller handbetätigten Ventile durch das Abschalten eines Magnetventils aufgehoben. In Folge schließen alle von diesen handbetätigten Ventilen geöffneten Produktventile und der Befüllvorgang wird unterbrochen.

Mit der Einführung unverbleiter Kraftstoffe sowie strengerer Vorschriften für den Umweltschutz entstand die Notwendigkeit, die Absperrarmatur zu verriegeln, um zum Beispiel zu verhindern, daß verbleite und unverbleite Kraftstoffe vermischt werden. Es ist ferner bekannt, zum Befüllen und Entleeren sogenannte Gaspendelschläuche zu verwenden, die verhindern, daß Dämpfe in die Atmosphäre gelangen. Es muß daher ferner sichergestellt sein, daß die Gaspendelschläuche sicher und richtig angeschlossen sind.

Schließlich können auch Sicherheitsvorkehrungen vorgesehen werden, die überprüfen, ob eine vollständige Ankupplung des Befüll- und Entleerungsschlauches stattgefunden hat und ob die richtigen Stutzen von Tankwagen einerseits und Abnahmeseite andererseits gewählt wurden. Erst wenn alle notwendigen Sicherheitsanforderungen erfüllt sind, dürfen entsprechende Absperrarmaturen geöffnet werden, bzw. müssen bei Wegfall einer der Bedingungen sofort wieder geschlossen werden.

Es ist bekannt, für die Betätigung der Absperrarmaturen Magnetventile zu verwenden, die von einer geeigneten Steuerung, beispielsweise einer im Tankwagen untergebrachten elektronischen Steuerung, aktiviert werden. Die Magnetventile verbinden eine Fluidquelle mit einer Betätigungsvorrichtung für die Absperrarmatur, beispielsweise einem pneumatischen Verstellzylinder.

Zur Auslösung der Betätigung dient ein Befehlsgerät, das im Stand der Technik ein Bedientableau aufweist, zum Beispiel mit Tasten, wobei für jede Absperrarmatur eine Taste vorgesehen ist, die eine entsprechende Betätigung der Absperrarmatur bewirkt, wenn sie gedrückt wird.

Die bisher bekanntgewordenen Systeme sind sogenannte aktive Systeme, bei denen eine elektronische Steuereinrichtung am Tankkraftwagen alle beschriebenen Bedingungen abprüft und über elektropneumatische Wandler die Absperrarmaturen ansteuert. Diese Ansteuerung ist relativ aufwendig, da sie pro Absperrarmatur ein Magnetventil benötigt. Da sich das Magnetventil im explosionsgefährdeten Bereich befindet, muß es in einer entsprechenden Schutzart ausgeführt werden. Die für die Ansteuerung des Magnetventils erforderliche Leistungselektronik muß ebenfalls in dieser Schutzart ausgeführt werden. Im übrigen ist die Leistungselektronik zu Ansteuerung der einzelnen Magnetventile aufwendig. Mit der Zahl der anzusteuernden Absperrarmaturen wächst auch die Unsicherheit eines derartigen Systems.

Der Erfindung liegt die Aufgabe zugrunde, eine Vorrichtung zur Überwachung oder Betätigung der Produktventile in Tankkraftwagen zu schaffen, die bei gleichbleibender Sicherheit einen deutlich geringeren Aufwand erfordert.

Diese Aufgabe wird durch die Merkmale des Patentanspruchs 1 gelöst.

Bei der erfindungsgemäßen Vorrichtung ist ein mit einer Fluidquelle verbundenes handbetätigtes Befehlsgerät vorgesehen. Ein derartiges Befehlsgerät ist in früheren Systemen bereits verwendet worden. Der Bediener betätigt zum Beispiel einem Handventil mit Selbsthaltung, um auf diese Weise zum Beispiel pneumatisch die Absperrarmatur zu öffnen oder zu schließen. Bei der erfindungsgemäßen Vorrichtung ist jedem handbetätigten Befehlsventil ein Sensor zugeordnet, der die Position der Handbetätigung überwacht und ein entsprechendes Signal auf die elektronische Steuervorrichtung gibt. Die elektronische Steuervorrichtung ist ferner mit einem einzigen steuerbaren Ventil, beispielsweise dem Magnetventil für die Abfüllsicherung, verbunden, dessen Ausgang mit allen Fluidschaltungen für die Betätigungsorgane für die Absperrarmaturen bzw. Bodenventile verbunden ist. Mit Hilfe des steuerbaren Ventils können die Selbsthaltungen aller Fluidschaltungen gleichzeitig so schnell unwirksam gemacht werden, daß trotz Betätigung des Schaltelements für die Betätigung des Befehlsventils eine Betätigung der zugeordneten Absperrarmatur unterbleibt.

Wird ein Schaltelement eines Befehlsventils betätigt, um zum Beispiel ein Bodenventil zu öffnen, erzeugt der zugeordnete Sensor ein Signal. Die elektronische Steuervorrichtung prüft, ob nach Maßgabe der Rand- bzw. Sicherheitsbedingungen das Bodenventil überhaupt geöffnet werden darf. Liegen die entsprechenden Voraussetzungen vor, bleibt es bei dem eingeleiteten Vorgang, und die Fluidschaltung, beispielsweise eine pneumatische Schaltung, verbindet die Fluidquelle mit dem Betätigungsorgan für das Bodenventil, das mithin geöffnet wird und in Selbsthaltung geht. Liegen jedoch die Voraussetzungen nicht vor, weil zum Beispiel der Gaspendelschlauch nicht oder falsch angeschlossen ist oder eine Vertauschung der Befüllungsleitungen stattgefunden hat, wird die entsprechende Fluidschaltung über das steuerbare Ventil von der elektronischen Steuervorrichtung unwirksam gemacht. Trotz einer entsprechenden Betätigung des Schaltelements kommt es nicht zu einem Öffnen des Bodenventils. Dies beruht darauf, daß die Trägheit bei der Einschaltung des Bodenventils um Größenordnungen höher ist als die der elektronischen Steuerung und der entsprechenden Ansteuerung des Magnetventils. Dies wird insbesondere auch dadurch erreicht, daß nur der Steuerdruck der Selbsthaltung bzw. der Vorsteuerung durch das steuerbare Ventil abgebaut werden muß. Die Steuerluft für die Bodenventile bzw. andere produktführenden Ventile wird hingegen durch einen zweiten Kreis abgebaut. Um eine zusätzliche Sicherheit einzubauen, kann nach einer weiteren Ausgestaltung der Erfindung auch eine Drossel in der Verbindungsleitung zwischen Fluidquelle und Betätigungsorgan geschaltet werden. Dadurch wird die Ansprechzeit verlängert.

Die Erfindung beruht mithin auf der Erkenntnis, daß elektrische bzw. elektronische Steuergeräte reaktionsschneller sind als pneumatische oder mechanische Systeme. Sie beruht ferner auf der Erkenntnis, daß es stets weniger aufwendig ist, mit Sensoren zu überwachen als elektronisch Leistung zu schalten.

Die erfindungsgemäße Vorrichtung verursacht daher einen weitaus geringeren Aufwand als herkömmliche Systeme, zumal auch aufwendige Bedientableaus, die in Explosionsschutzart auszuführen sind, in Fortfall kommen können.

Ein weiterer nicht unmaßgeblicher Vorteil besteht darin, daß es sehr einfach ist, das eine steuerbare Ventil durch ein zusätzliches verplombtes Handventil zu umgehen. Das ermöglicht bei Ausfall der elektronischen Steuerung die uneingeschränkte Nutzung der pneumatischen Steuerung und damit die Abgabe von Kraftstoff. Die bekannten Systeme lassen dies nicht zu und erzwingen bei Ausfall die Rückfahrt ohne die Möglichkeit der Abgabe.

Nach einer Ausgestaltung der Erfindung ist vorgesehen, daß der Sensor von einem magnetbetätigten Reed-Kontakt gebildet ist. Alternativ kann der Sensor von einem Hallgenerator gebildet werden. Beispielsweise wird der Hallgenerator durch einen Magneten aktiviert, der zum Beispiel mit einer Schaltstange verbunden ist.

Nach einer anderen Ausgestaltung der Erfindung ist jedem Betägigungselement das Ende eines Lichtleiters zugeordnet, von dem ein Strang mit einer Lichtquelle und ein anderer mit einem lichtempfindlichen Empfänger verbunden ist, wobei Lichtquelle und Empfänger in der elektronischen Steuervorrichtung angeordnet sind. So kann zum Beispiel das ankommende Licht in der unbetätigten Stellung reflektiert und in der betätigten Stellung nicht reflektiert werden oder umgekehrt. Da auf diese Weise kein elektrischer Strom zum Befehlsgerät geleitet wird, müssen keine Vorkehrungen für den Explosionsschutz getroffen werden.

Es versteht sich, daß auch Gruppen von Absperrarmaturen und zugehörige Ansteuereinheiten mit einem steuerbaren Ventil zusammengefaßt werden können, so daß auch zwei oder mehr steuerbare Ventile bei zwei oder mehr Gruppen vorgesehen sein können.

Die Erfindung wird nachfolgend anhand einer Zeichnung näher erläutert.

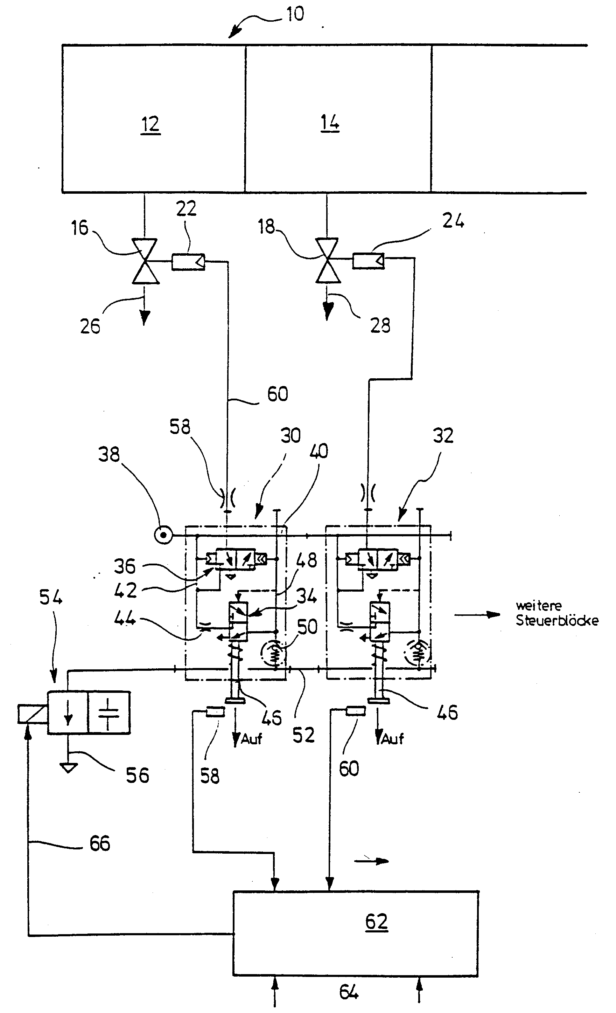

Die einzige Figur zeigt ein schematisches Schaltbild für eine Vorrichtung nach der Erfindung.

In der Figur ist ein Tank 10 eines Tankkraftwagens angedeutet, der eine größere Anzahl von einzelnen Kammern aufweisen kann, von denen Kammern 12 und 14 dargestellt sind. Zu den einzelnen Kammern gehören Absperrarmaturen, sogenannte Bodenventile, von denen in der Figur die Bodenventile 16 und 18 dargestellt sind. Sie heißen Bodenventile, weil sie üblicherweise im Boden der Kammern angebracht sind. Die Absperrarmaturen können natürlich auch im unteren Bereich einer Seitenwand vorgesehen werden.

Die Bodenventile 16, 18 werden durch pneumatische Verstellglieder 22, 24, beispielsweise Verstellzylinder, betätigt. Beim Öffnen der Bodenventile fließt der Kraftstoff aufgrund von Schwerkraftwirkung heraus, wie durch die Pfeile 26, 28 angedeutet.

Die Ansteuerung der pneumatischen Verstellglieder 22, 24 erfolgt über pneumatische Steuerblöcke 30, 32, die ein pneumatisches Vorsteuerventil 34 und ein Steuerventil 36 enthalten. Die Steuerblöcke 30, 32 sind an eine gemeinsame Druckquelle 38 angeschlossen. Innerhalb eines Steuerblocks 30 ist der mit der Druckquelle 38 verbindbare Kanal 40 über eine Abzweigung 42 mit einem Eingang des Steuerventils 36 sowie mit dem Steuereingang des Ventils 36 verbunden. Die Abzweigung 42 ist ferner über eine Drossel 44 mit dem Eingang des Vorsteuerventils 34 verbunden, das durch eine Schaltstange 46 betätigt werden kann. Der Ausgang des Schaltventils 34 ist über eine Leitung 48 mit einem weiteren Steuereingang des Steuerventils 36 und über ein Rückschlagventil 50 mit einer Leitung 52 verbunden, die aus hintereinander geschalteten Kanälen in den Steuerblöcken 30, 32 gebildet ist. Die Leitung 52 führt zu einem Eingang eines Magnetventils 54, das in stromlosem Zustand mit Atmosphäre verbunden ist, wie bei 56 angedeutet.

Der Ausgang des Steuerventils 36 ist über eine Drossel 58 und eine Leitung 60 mit dem Verstellzylinder 22 bzw. 24 verbunden.

Den Betätigungsstangen 46 der Steuerblöcke 30, 32 sind Sensoren 58 bzw. 60 zugeordnet, die mit einer elektronischen Steuervorrichtung 62 verbunden sind. Die Sensoren 58, 60, die auch durch Lichtleiter gebildet sein können, die mit Lichtquelle und lichtelektrischem Empfänger verbunden sind, um wahlweise eine Reflexion zum lichtelektrischen Empfänger zu leiten je nach Position der Betätigungsstange 46, stellen mithin fest, welche Position die Stange 46 hat und damit, ob das Vorsteuerventil 34 geöffnet oder geschlossen ist.

Die elektronische Steuervorrichtung 62 ist ebenfalls am Tankwagen angeordnet. Sie erhält weitere Signale von verschiedenen Quellen. So kann zum Beispiel festgestellt werden, ob der Befüll- oder Entleerungsschlauch sicher mit den entsprechenden Stutzen am Tankwagen bzw. am Depot bzw. am Abnehmerlager gekoppelt ist. Dasselbe gilt für einen sogenannten Gaspendelschlauch. Ferner kann überprüft werden, ob die richtigen Stutzen miteinander in Verbindung stehen. Eine weitere Sicherheitsmaßnahme ist zum Beispiel die Abfüllsicherung. Ein Sensor am Abnehmertank mißt den maximalen Pegel und übermittelt über eine entsprechende Übertragungsstrecke auf den Tankwagen ein Signal zum Beispiel des Vollzustands, welches ebenfalls in die elektronische Steuervorrichtung gegeben wird.

Die Vielzahl der in die Steuervorrichtung 62 zu gebenden Signale ist bei 64 angedeutet.

Die beschriebene Vorrichtung arbeitet wie folgt. Wird zum Beispiel die Betätigungsstange 46 des linken Steuerblocks 30 gezogen, wird, verzögert durch die Drossel 44, durch das geöffnete Steuerventil 34 und die Leitung 48 Druckluft auf den entsprechenden Steuereingang des Steuerventils 36 gegeben. Dieses öffnet mithin, so daß Druckluft über die Drossel 58 zum Verstellglied 22 strömen kann. Nach der durch die Drosseln 44, 58 und der komponentenbedingten Verzögerungszeit wird das Verstellglied 22 betätigt und öffnet das Bodenventil 16. Zur gleichen Zeit wie das Schaltventil geöffnet wurde, meldet der Sensor 58 ein entsprechendes Signal an die elektronische Steuervorrichtung 62. Diese prüft anhand der eingegebenen Bedingungen, ob das Bodenventil 16 überhaupt geöffnet werden darf. Ist die Entscheidung negativ, wird über die Steuerleitung 66 das Elektromagnetventil 54 abgeschaltet, das in die Öffnungsstellung geht. Dadurch erfolgt eine Entlüftung der Steuerblöcke 30 und 32, so daß das Steuerventil 36 wieder in die Schließstellung geht. Da der zuletzt beschriebene Vorgang viel rascher abläuft als der Aufbau eines ausreichenden Drucks am Verstellglied 22, kommt es in diesem Fall bei Betägigung der Betätigungsstange 46 nicht zum Öffnen des Bodenventils, vielmehr bleibt es wie bisher geschlossen. Führt die Überprüfung in der Steuervorrichtung 62 indessen dazu, daß keine dem Öffnen des Bodenventils 16 entgegenstehenden Bedingungen vorliegen, wird das Magnetventil, wenn noch nicht geschehen, eingeschaltet und in der beschriebenen Art und Weise das Bodenventil 16 geöffnet.

Es versteht sich, daß auch für die übrigen Kammern jeweils Steuerblöcke vorgesehen werden können, die sämtlich an das Magnetventil 58 angeschlossen sein können. Es ist jedoch auch möglich, die Steuerblöcke gruppenweise zusammenzufassen und je Gruppe ein Elektromagnetventil vorzusehen. Die Steuerblöcke 30, 32 bestehen aus einzelnen blockartigen Gehäusen, die aneinanderstoßend miteinander verbunden werden. Ein derartiges Prinzip ist jedoch grundsätzlich bekannt.

## Patentansprüche

1. Vorrichtung zur Überwachung der Betätigung der Produktventile (16, 18) in Tankkraftwagen, mit den Produktventilen zugeordneten, mit einer Fluidquelle (38) verbindbaren Betätigungsorganen (22, 24), einem Befehlsgerät (30, 32), das wahlweise eine oder mehrere Betätigungsorgane (22, 24) mit der Fluidquelle verbindet und einer elektronischen Steuervorrichtung (62), die mit Überwachungsmitteln verbunden ist und die Aktivierung eines Betätigungsorgans sperrt, wenn ein entsprechendes von den Überwachungsmitteln erzeugtes Freigabesignal von den Überwachungsmitteln fehlt, dadurch gekennzeichnet, daß das Befehlgerät ein mit der Fluidquelle (38) verbundenes handbetätigtes Befehlsgerät (30, 32) ist, das je Produktventil (16, 18) eine Fluidschaltung und ein handbetätigbares Betätigungselement (46) aufweist zur Herstellung einer Verbindung der Fluidquelle (38) mit einem Betätigungsorgan (22, 24), ein einziges steuerbares Ventil (54) mit der elektronischen Steuervorrichtung (62) verbunden ist, wobei das Ventil bei Betätigung sämtliche Verbindungsleitungen zwischen dem Betätigungsorgan (22, 24) und dem zugeordneten Befehlsgerät (30, 32) drucklos schaltet und zur Überwachung ihrer Position den Betätigungselementen (46) ein mit der elektronischen Steuervorrichtung (62) verbundener Sensor (58, 60) zugeordnet ist.

2. Vorrichtung nach Anspruch 1, dadurch gekennzeichnet, daß in der Verbindungsleitung (60) zwischen Fluidquelle (38) und Betätigungsorgan (22, 24) eine Drossel (58) geschaltet ist.

3. Vorrichtung nach Anspruch 1 oder 2, dadurch gekennzeichnet, daß die Fluidschaltung aus aneinandergesetzten Gehäuseblöcken gebildet ist, die in Reihe gemeinsam mit der Fluidquelle (38) und einer mit dem steuerbaren Ventil verbundenen Entlüftungsleitung (52) verbunden sind.

4. Vorrichtung nach einem der Ansprüche 1 bis 3, dadurch gekennzeichnet, daß der Sensor von einem magnetbetätigten Reed-Kontakt gebildet ist.

5. Vorrichtung nach einem der Ansprüche 1 bis 3, dadurch gekennzeichnet, daß der Sensor von einem Hall-Generator gebildet ist.

6. Vorrichtung nach einem der Ansprüche 1 bis 3, dadurch gekennzeichnet, daß jedem Betätigungselement das Ende eines Lichtleiters zugeordnet ist, von dem ein Strang mit einer Lichtquelle und ein anderer mit einem lichtempfindlichen Empfänger verbunden ist, wobei Lichtquelle und Empfänger in der elektronischen Steuervorrichtung angeordnet sind.

## Claims

1. A device for monitoring the activation of product valves (16,18) in fuel trucks, comprising actuating mechanisms (22,24) being associated to said product valves and connectable to a fluid source (38), a command means which selectively connects one or more actuating mechanisms (22, 24) to said fluid source, and an electronic control means (62) being connected to monitoring means and disabling the activation of an actuating mechanism if a corresponding release signal generated by said monitoring means is not present, characterized in that the command means connected to said fluid source (38) is a hand-actuated command means (30,32) including a fluid control means and a hand-actuated actuating mechanism (46) associated to each product valve (16,18) for making a connection between said fluid source (38) and an actuating mechanism (22,24), that a single controllable valve (54) is connected to said electronic control means (62), wherein said valve (54) when being actuated, switches all connection lines between said actuating mechanism (20,24) and said associated command means to zero pressure, and that a sensor (58,60) being connected to said electronic control means (62) is associated to said actuating mechanisms (46) for monitoring the position thereof.

2. A device according to claim 1, characterized in that a throttle (58) is provided within said connection line (60) between said fluid source (38) and said actuating mechanism (22,24).

3. A device according to claim 1 or 2, characterized in that said fluid control means is formed by blocks adjoining each other being connected in series to said fluid source (38) and to a vent line (52) connected to said controllable valve.

4. A device according to any of the claims 1 to 3, characterized in that said sensor is formed by a solenoid operated reed contact.

5. A device according to any of the claims 1 to 3, characterized in that said sensor is formed by a Hall generator.

6. A device according to any of the claims 1 to 3, characterized in that the end of a light guide is associated to each actuating element, one line of said light guide being connected to a light source and another one to a light-sensitive receiver, said light source and said receiver being arranged within said electronic control means.

## Revendications

1. Dispositif de contrôle de la commande des vannes de produit (16, 18) de camions-citernes, comportant des organes moteurs (22, 24) associés aux vannes de produit (16, 18) et reliables à une source de fluide (38), un appareillage de commande (30, 32), qui relie, au choix, un ou plusieurs organes moteurs (22, 24) à la source de fluide, et un dispositif électronique de commande (62), lui-même relié à des moyens de contrôle et bloquant l'actionnement d'un organe moteur si un signal de libération correspondant, émis par les moyens de contrôle, fait défaut à ces moyens de contrôle,
caractérisé en ce que
- l'appareillage de commande est un organe de commande (30, 32) actionné manuellement, relié à la source de fluide (38), et comportant, pour chaque vanne de produit (16, 18), un circuit de fluide et un moyen d'actionnement manuel (46), pour réaliser une liaison de la source de fluide (38) vers un organe moteur (22, 24),
- une unique soupape commandable (54) est reliée au dispositif électronique de commande (62),
étant entendu que cette soupape, lorsqu'on l'actionne, met hors pression les différentes conduites de liaison entre l'organe moteur (22, 24) et l'organe de commande (30, 32) associé,
et qu'un détecteur (58, 60) relié au dispositif électronique de commande (62) est associé aux moyens d'actionnement (46) pour contrôler leur position.

2. Dispositif suivant la revendication 1, caractérisé en ce qu'un étranglement (58) est placé dans la conduite de liaison (60) entre la source de fluide (38) et le ou les organes moteurs (22, 24).

3. Dispositif suivant la revendication 1 ou la revendication 2, caractérisé en ce que le circuit de fluide est formé de blocs de carter placés les uns contre les autres, et reliés ensemble, en série, à la source de fluide (38) et à une conduite de mise à l'atmosphère (52), raccordée à la soupape commandable.

4. Dispositif suivant l'une des revendications 1 à 3, caractérisé en ce que le détecteur est formé par un contact Reed, à commande magnétique.

5. Dispositif suivant l'une des revendications 1 à 3, caractérisé en ce que le détecteur est constitué par un générateur à effet Hall.

6. Dispositif suivant l'une des revendications 1 à 3, caractérisé en ce qu'à chaque organe d'actionnement est associée l'extrémité d'un câble à fibre optique, l'un des brins étant relié à une source de lumière et l'autre à un récepteur sensible à la lumière, la source lumineuse et le récepteur étant disposés dans le dispositif électronique de commande.
